# EUROPEAN PATENT APPLICATION

(11) **EP 2 180 608 A1**
(43) Date of publication of application: **28.04.2010**
(21) Application number: 08800723.2
(22) Date of filing: 29.08.2008
(51) Int. Cl.: H04B 7/26

(54) **REALIZATION METHOD AND SYSTEM FOR BINDING ACCESS POINT AND OPERATOR**

(30) Priority: 14.09.2007 CN 200710145491
(71) Applicant: Shenzhen Huawei Telecommunication Technologies Co., Ltd., Shenzhen, Guangdong 518129 (CN)
(72) Inventor: HU, Guojie, Guangdong 518129 (CN); ZHU, Wei, Guangdong 518129 (CN)
(74) Representative: Körber, Martin Hans
(86) International application number: PCT/CN2008/072211
(87) International publication number: WO 2009/039746

(57) **Abstract**

An implementing method and system for binding an access point (AP) and an operator in a mobile communication network are provided. An implementing method includes: receiving a network service request message sent by the AP, in which the message includes an operator ID of an operator providing the AP; terminating, by a network service entity, communication with the AP when the operator ID in the network service request message is inconsistent with a preconfigured operator ID. Another implementing method includes: stopping, by an AP, an operation when an obtained PLMN value of a serving operator is inconsistent with prestored PLMN values of an operator providing the AP. The implementing system includes an AP and a network service entity.

## Description

### FIELD OF THE TECHNOLOGY

The present invention relates to a field of mobile communication technology, and more particularly to an implementing technology for binding an access point and an operator in a mobile communication network.

### BACKGROUND OF THE INVENTION

With the development of Internet services and the extensive application of broadband access networks and radio networks, fast and convenient access to the Internet attract more and more attention, and the research on the convergence of advantages of a mobile access network and a fixed access network is an important topic for the communication industry. The emergence of a new mobile communication network structure and corresponding network entities enables a user equipment (UE) to directly access the Internet. The Universal Mobile Telecommunications System (UMTS) is taken as an example to illustrate the new mobile communication network structure and the corresponding network entities. Two network entities are added into the existing UMTS network structure, namely, a UMTS access point (UMTS AP) and a UMTS access gateway (UMTS AG). The UMTS AP provides services to subordinate UEs, such that the UEs can implement functions such as voice call and accessing the Internet. The UMTS AP is connected with the UMTS AG through a transmission network, and functions and interfaces of other UMTS network entities remain unchanged. The new network entities UMTS AG and UMTS AP are described briefly in the following.

For a PS domain, the UMTS AG implements control plane functions of a Gateway General Packet Radio Service Support Node (GGSN) and a Service GPRS Support Node (SGSN) and a part of control plane functions of a Radio Network Controller (RNC), and provides UMTS control plane interfaces the same as those of the GGSN/SGSN. For a CS domain, the UMTS AG implements functions similar to those of the RNC, and provides a complete voice access function.

The functions of the UMTS AG are as follows: network access control, control plane processing in packet routing and forwarding, voice conversion and forwarding, mobility management, AP management, accounting management, short message service, Customized Application for Mobile Network Enhanced Logic (CAMEL) services, and network management.

The UMTS AG provides the following external interfaces: Ga, Gb, Gd, Ge, Gf, Gn control plane, Gr, and Gs, which use the same protocol stacks as the existing UMTS network.

The UMTS AP provides all functions of a UMTS NodeB and a part of control functions of the RNC. In addition, for a PS domain, the UMTS AP provides user plane functions of the GGSN, SGSN, and RNC.

The functions of the UMTS AP are as follows: radio access control, user plane processing in packet routing and forwarding, voice coding and decoding, radio resources management, and network management.

The UMTS AP provides the following external interfaces: Gi and Gn user plane, which use the same protocol stacks as the existing UMTS network.

In addition to the UMTS network, the network entities AG and AP are also applicable to other mobile communication networks such as the GPRS, Time Division-Synchronous Code Division Multiple Access (TD-SCDMA), and CDMA2000, and are in substantially the same new network structure in various mobile communication networks. The transmission network between the AG and AP may be an x Digital Subscriber Loop (xDSL) network, an IP over Ethernet network, an IP over ATM network, or a Worldwide Interoperability Microwave Access (WiMAX) network. The type of the transmission network does not affect major functions of the AG and AP, as long as the adaptation between different transmission networks is implemented between the two network entities.

The network entity AP is a terminal device, which is often used in families, small recreational areas, and SOHO areas. A user needs to buy or be presented an AP from an operator. For different operators, different business modes may be adopted to provide the APs to users. Some common business modes are as follows:
Business mode 1: the operator presents an AP to a user, and the user needs to sign a subscription agreement;
Business mode 2: a user buys an AP from the operator, and signs a subscription agreement with the operator; the operator grants preferential charging policies or more services to the user;
Business mode 3: the operator leases an AP to a user, and charges lease fees on the user; the user signs a subscription agreement with the operator.

The inventors find that when different operators use different business modes, different operators or users using APs provided by different operators have different investment on the APs, so an operator always requires that the users using the APs provided by the operator do not operate on networks of other operators; otherwise, the benefits of both the operator and the users will be damaged. For example, if operator A adopts business mode 1, while operator B adopts business mode 2, operator A will require that the APs presented to the users cannot work on the network of operator B to protect the investment on the APs by operator A; meanwhile, operator B will require that the APs presented by operator A cannot work on the network thereof as operator B provides preferential charging policies or more services, so as to protect the benefits of operator B and the investment on the APs by the users. The inventors think it is necessary to bind the APs and operators, such that the APs provided by an operator cannot work on networks of other operators, so as to protect the benefits of the operators and users.

### SUMMARY OF THE INVENTION

The embodiment of the present invention is directed to an implementing method and system for binding an AP and an operator, which implement binding of the AP and the operator, such that the AP provided by the operator cannot work on networks of other operators.

According to one aspect of the present invention, it provides an implementing method for binding an AP and an operator. The method includes the following steps.

Receive a network service request message sent by the AP, in which the network service request message contains an operator identity (ID) of an operator providing the AP; and

Terminate communication with the AP when the operator ID in the network service request message is inconsistent with a preconfigured operator ID.

According to another aspect of the present invention, it provides an implementing system for binding an AP and an operator. The system includes an AP and a network service entity.

The AP is adapted to send a network service request message, in which the network service request message contains an operator ID of an operator providing the AP.

The network service entity is adapted to receive the network service request message sent by the AP, and terminate communication with the AP when the operator ID in the network service request message is inconsistent with a preconfigured operator ID.

According to another aspect of the present invention, it provides an AP and a network service entity. The AP includes an ID storage unit and a sending unit.

The ID storage unit is adapted to store a preconfigured operator ID.

The sending unit is adapted to send a network service request message, in which the network service request message contains the operator ID stored in the ID storage unit.

The network service entity includes an ID storage unit, a receiving unit, and a network service control unit.

The ID storage unit is adapted to store a preconfigured operator ID.

The receiving unit is adapted to receive the network service request message, in which the network request message contains the operator ID.

The network service control unit is adapted to terminate communication with the AP when the operator ID in the network service request message is inconsistent with the operator ID stored in the ID storage unit.

According to another aspect of the present invention, it provides an implementing method for binding an AP and an operator. The method includes the following steps.

Acquire a Public Land Mobile Network (PLMN) value of a serving operator; and Stop working when the obtained PLMN value of the serving operator is inconsistent with prestored PLMN values of a providing operator.

According to another aspect of the present invention, it provides an AP. The AP includes a PLMN value storage unit, an acquiring unit, and an access control unit.

The PLMN value storage unit is adapted to store PLMN values of a providing operator.

The acquiring unit is adapted to acquire a PLMN value of a serving operator.

The access control unit is adapted to stop an operation when the PLMN value acquired by the acquiring unit is inconsistent with the PLMN values stored in the PLMN storage unit.

Through the implementing method and system for binding an AP and an operator according to the embodiments of the present invention, under the new network structure in which the AP and the AG are added into a mobile communication network, preconfigured operator IDs are stored in the AP and the network service entity. When the operator ID in the network service request message sent by the AP is inconsistent with the preconfigured operator ID, the network service entity terminates the communication with the AP. Alternatively, the PLMN values of the providing operator of the AP are prestored in the AP, and when the PLMN value of the serving operator acquired by the AP is inconsistent with the prestored PLMN values of the providing operator, the AP stops the operation. The embodiments in which the network service entity terminates the communication with the AP and the AP stops the operation both implement the binding between the AP and the operator, thereby ensuring that the AP provided by an operator cannot work on networks of other operators.

### BRIEF DESCRIPTION OF THE DRAWINGS

To illustrate the technical solutions according to the embodiments of the present invention or in the prior art more clearly, the accompanying figures for describing the embodiments or the prior art are introduced briefly in the following. Apparently, the accompanying drawings in the following description are only some embodiments of the present invention; persons of ordinary skill in the art can obtain other drawings according to the accompanying drawings without paying any creative efforts.
FIG. 1 is a flow chart of implementing the binding between a UMTS AP and an operator according to a first embodiment of the present invention;
FIG. 2 is a flow chart of implementing the binding between a UMTS AP and an operator according to a second embodiment of the present invention;
FIG. 3 is a flow chart of a first implementing method for binding a UMTS AP and an operator according to an embodiment of the present invention;
FIG. 4 is a block diagram of a first implementing system for binding a UMTS AP and an operator according to an embodiment of the present invention;
FIG. 5 is a flow chart of implementing the binding between a UMTS AP and an operator according to a third embodiment of the present invention;
FIG. 6 is a flow chart of implementing the binding between a UMTS AP and an operator according to a fourth embodiment of the present invention;
FIG. 7 is a flow chart of a second implementing method for binding a UMTS AP and an operator according to an embodiment of the present invention; and
FIG. 8 is a schematic view of an AP for implementing the binding between a UMTS AP and an operator according to an embodiment of the present invention.

### DETAILED DESCRIPTION OF THE EMBODIMENTS

The technical solutions according to the embodiments of the present invention are described clearly and completely with reference to the accompanying drawings of the embodiments. Apparently, the embodiments herein are only a part of rather than all of the embodiments of the present invention. All other embodiments obtained by persons of ordinary skill in the art on the basis of the embodiments of the present invention without paying any creative efforts shall fall within the protective scope of the present invention.

The embodiments of the present invention provide an implementing method and system for binding an AP and an operator. Under the new network structure in which an AP and an AG are added to a mobile communication network, the present invention implements the binding between the AP and the operator, such that the AP provided by an operator cannot work on networks of other operators, so as to prevent users of different operators from exchanging the APs and protect the investment of the operators and AP users. The technical solutions according to the embodiments of the present invention are applicable in new network structures in which the AP and AG are added to a mobile communication network, such as UMTS, GPRS, CDMA2000, TD-SCDMA, WiMAX, and Long Term Evolution (LTE). However, the present invention is not limited to the above network structures. The new network structure in which a UMTS AP and a UMTS AG are added to a UMTS network is taken as an example in the following description.

The UMTS AP usually adopts a set-card separation design, and can work only after a Subscriber Identity Module/UMTS Subscriber Identity Module (SIM/USIM) card is inserted therein. The SIM/USIM card of the UMTS AP is the same as that of a common UE, and stores Uniform Resource Locator (URL) address of a registration server (Server) of an operator. For a UMTS AP not bound with an operator, after the SIM/USIM card is inserted and the UMTS AP is powered on, the basic operating process includes the following steps.

In step a, after being powered on, the UMTS AP checks whether the SIM/USIM card is changed, and if yes, Step b is performed; otherwise, Step f is performed directly.

In step b, the UMTS AP sends an AP Boot Request message to the Server according to the URL address of the Server in the SIM/USIM card, and requests to update configuration information.

In step c, after the UMTS AP receives an AP Boot Response returned by the Server, it indicates that the configuration information is updated successfully.

In step d, the UMTS AP acquires an IP address of the corresponding UMTS AG from the Server, and sends an AP Access Request to the corresponding UMTS AG according to the IP address; the UMTS AG authenticates the UMTS AP.

In step e, after the UMTS AP receives an AP Access Response returned by the UMTS AG, it indicates that the AP successfully accesses the UMTS AG.

In step f, an Element Management System (EMS) configures radio parameters of the UMTS AP to establish a cell, and the process for establishing the UMTS AP cell is similar to the process for establishing a UMTS NodeB cell.

In step g, normal services can be provided after the UMTS AP cell is established, such that UEs in the cell can perform voice calls or access the Internet.

To ensure that the UMTS AP provided by an operator cannot switch to work on networks of other operators freely, and prevent users of different operators from exchanging the UMTS APs, the UMTS APs and the operators must be bound. The implementing method for binding an UMTS AP and an operator is described in the following through some specific embodiments.

### First Embodiment

The first embodiment provides an implementing method for binding an UMTS AP and an operator based on a Register Server. When the UMTS AP is manufactured and provided, a preconfigured operator ID is stored in the UMTS AP and the Register Server, and the operator IDs of different operators are different. The corresponding operator ID may be written into the UMTS APs provided by each operator through customization. For the Register Server of each operator, the operator ID of the operator can be configured on the Register Server by using a configuration file.

To facilitate the binding of the UMTS AP and the operator, the PLMN value of the operator may be set as the operator ID of the operator. An operator can have the PLMN values only after application. The PLMN values of different operators are also different, and an operator can use only the PLMN values obtained through application, but cannot use the PLMN values of other operators. An operator can obtain multiple PLMN values through application.

In this method, if the PLMN value of an operator is 460 00, the operator ID of the operator may also be configured as 460 00. If an operator has multiple PLMN values at the same time, a random one may be selected from the PLMN values as the operator ID of the operator. Certainly, the operator ID may also be any selected number, as long as the different operators can be distinguished according to the operator ID.

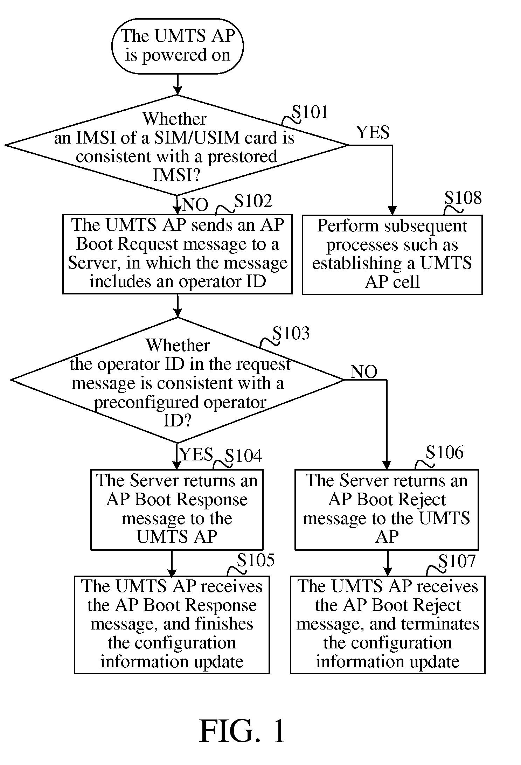

As shown in FIG. 1, to implement the binding between the UMTS AP and the operator, after the UMTS AP with the correct SIM/USIM card inserted therein is powered on, the method includes the following steps.

In Step S101, the UMTS AP compares a prestored International Mobile Subscriber Identifier (IMSI) with an IMSI of the current SIM/USIM card to determine whether they are consistent; if not, it is considered that the SIM/USIM card is replaced, so the configuration information needs to be updated, the prestored IMSI is refreshed by the IMSI of the current SIM/USIM card, and Step S102 is performed; otherwise, it is considered that the SIM/USIM card is not replaced, and Step S 108 is performed.

The UMTS AP stores a default IMSI when delivered, for example, FF FF ... FF. When the UMTS AP operates for the first time after delivery, the prestored IMSI is the default value, which is always inconsistent with the IMSI of the current SIM/USIM, so it is determined that the SIM/USIM card is replaced. It should be noted that in addition to the method described in this embodiment, whether the SIM/USIM card is replaced may also be determined with other methods in the prior art.

In Step 102, the UMTS AP sends the AP Boot Request message to the Register Server according to the URL address of the Register Server stored in the current SIM/USIM card. The AP Boot Request message includes the preconfiguredoperator ID of the UMTS AP, and may also include an equipment serial number of the UMTS AP, such that the Server can know the equipment information of the UMTS AP.

In Step S103, the Register Server determines whether the operator ID in the AP Boot Request message is consistent with the preconfigured operator ID stored locally, and if yes, Step S 104 is performed; otherwise, Step S 106 is performed.

In Step S104, the Register Server returns the AP Boot Response message to the UMTS AP. The AP Boot Response message includes the configuration information, and may also include the equipment serial number of the UMTS AP.

The UMTS APs in different regions may be maintained by one Register Server or a group of Register Servers. When the configuration information of a UMTS AP needs to be updated, the UMTS AP sends the AP Boot Request message to the Register Server, and after receiving the request message, the Register Server queries and obtains the configuration information of the UMTS AP from a database of the Register Server according to location information of the UMTS AP carried in the message, and sends the configuration information to the UMTS AP through the AP Boot Response.

In Step S105, the UMTS AP receives the AP Boot Response message returned by the UMTS AP, and the configuration information update is completed.

After the configuration information update of the UMTS AP is completed, the process for accessing the UMTS AG is performed. After the access is completed, radio parameters of the UMTS AP are configured by the EMS to establish a cell, so as to provide normal services.

In Step S106, the Register Server returns an AP Boot Reject message to the UMTS AP, and the AP Boot Reject message may include the equipment serial number of the UMTS AP.

In Step S107, the UMTS AP receives the AP Boot Reject message returned by the UMTS AP, and the configuration information update is terminated.

In Step S108, the radio parameters of the UMTS AP are configured by the EMS to establish the cell, and after the cell is established, the UMTS AP can provide normal services.

Certainly, when the Register Server determines that the operator ID in the AP Boot Request message is inconsistent with the preconfigured operator ID, the Register Server may also not return a message to the UMTS AP. Thus, the UMTS AP cannot perform subsequent operations because no message returned by the Register Server is received, so as to terminate the communication between the UMTS AP and the Register Server.

Therefore, when the user tries to use the UMTS AP provided by operator A on the network of operator B, in order to access the UMTS AP to operator B, the user must insert the SIM/USIM card of operator B into the UMTS AP. When the SIM/USIM card is replaced, the configuration information of the UMTS AP must be updated, and as the operator is changed, the operator ID of the Server is inconsistent with the preconfigured operator ID of the UMTS AP, such that the Server terminates the communication with the UMTS AP. The method according to the first embodiment implements the binding between the UMTS AP and the operator, and ensures that the UMTS AP provided by an operator cannot work on networks of other operators freely.

### Second Embodiment

The second embodiment provides an implementing method for binding an UMTS AP and an operator based on a UMTS AG. When the UMTS AP is manufactured and provided, a preconfigured operator ID is stored in the UMTS AP and the UMTS AG, and operator IDs of different operators are different. The corresponding operator ID may be written into the UMTS APs provided by each operator through customization. For the UMTS AG of each operator, the operator ID of the operator can be configured on the UMTS AG by using a configuration file. The operator ID may be any PLMN value of the operator, or be any selected number, as long as the different operators can be distinguished according to the operator ID

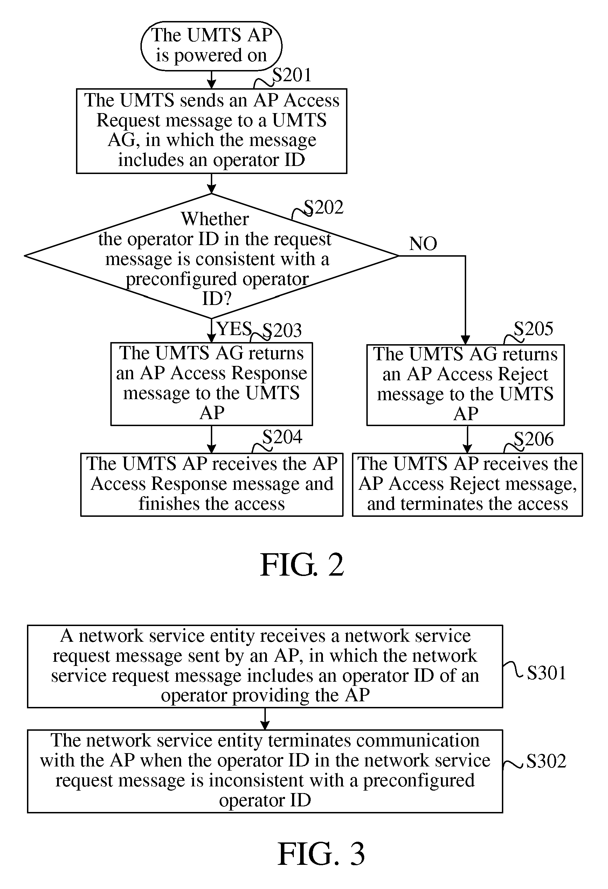

As shown in FIG. 2, to implement the binding the UMTS AP and the operator, after the UMTS AP is powered on and it is determined that the SIM/USIM card is replaced and the configuration information update is completed, the method includes the following steps in an attempt to access the UMTS AG:

In Step S201, the UMTS AP sends an AP Access Request to the corresponding UMTS AG according to an IP address of the UMTS AG acquired from the Register Server; the AP Access Request message includes the preconfigured operator ID of the UMTS AP, and may include an equipment serial number of the UMTS AP.

In Step S202, the UMTS AG receives the AP Access request of the UMTS AP, and determines whether the operator ID in the AP Access Request is consistent with the preconfigured operator ID; if yes, Step S203 is performed; otherwise, Step S205 is performed.

In Step S203, the UMTS AG returns an AP Access Response message to the UMTS AP, and the AP Access Response message may include the equipment serial number of the UMTS AP.

In Step S204, the UMTS AP receives the AP Access Response message, and the access is completed.

After the access of the UMTS AP is completed, radio parameters of the UMTS AP are configured by an EMS to establish a cell, so as to provide normal services.

In Step S205, the UMTS AG returns an AP Access Reject message to the UMTS AP to reject the access the UMTS AP, and AP Access Reject message may include the equipment serial number of the UMTS AP.

In Step S206, the UMTS AP receives the AP Access Reject message, and the access is terminated.

Certainly, when the UMTS AG determines that the operator ID in the AP Access Request message is inconsistent with the operator ID preconfigured locally, the UMTS AG may also not return a message to the UMTS AP. Thus, the UMTS AP will not perform subsequent operations because no message returned by the UMTS AG is received, so as to terminate the communication between the UMTS AP and the UMTS AG.

When the user tries to use the UMTS AP provided by operator A on a network of operator B, in order to access the UMTS AP to operator B, the user must insert the SIM/USIM card of operator B into the UMTS AP, so the configuration information update process of the UMTS AP and the authentication process of the UMTS AG must be performed. As the operators are changed, the operator ID of the UMTS AG is always inconsistent with the preconfigured operator ID of the UMTS AP, so the UMTS AG will terminate the communication with the UMTS AP in the authentication process of the UMTS AG. The method according to the second embodiment implements the binding between the UMTS AP and the operator, and ensures that the UMTS AP provided by an operator cannot work on networks of other operators freely.

According to the solutions of the first embodiment and the second embodiment, in an embodiment, the present invention provides an implementing method for binding an AP and an operator. As shown in FIG. 3, the method includes the following steps.

In Step S301, a network service entity receives a network service request message sent by the AP, in which the network service request message includes an operator ID of an operator providing the AP.

In Step S302, when the operator ID in the network service request message is inconsistent with a preconfigured operator ID, the network service entity terminates the communication with the AP.

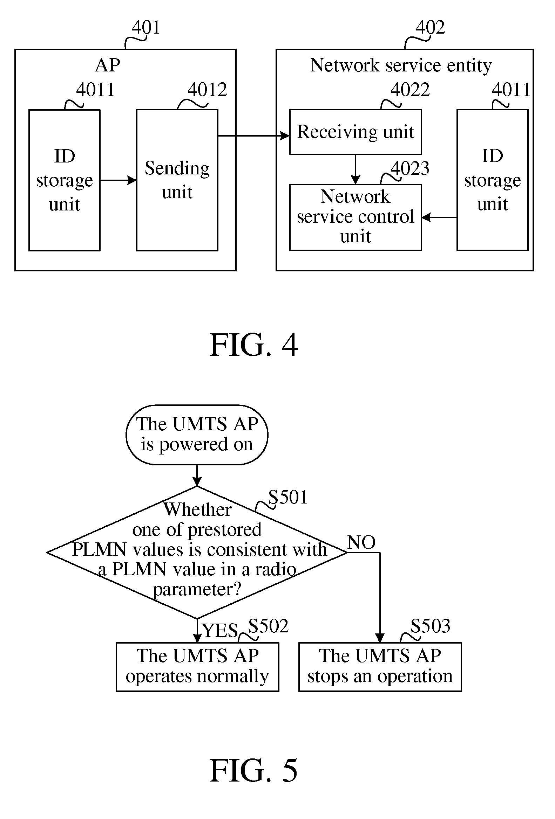

In an embodiment, the present invention provides an implementing system for binding an AP and an operator. As shown in FIG. 4, the system includes an AP 401 and a network service entity 402.

The AP 401 is adapted to send a network service request message, in which the network service request message contains an operator ID of an operator providing the AP.

The network service entity 402 is adapted to receive the network service request message sent by the AP 401, and terminate communication with the AP 401 when the operator ID in the network service request message is inconsistent with a preconfigured operator ID.

Specifically, the AP 401 includes an ID storage unit 4011 and a sending unit 4012.

The ID storage unit 4011 is adapted to store a preconfigured operator ID.

The sending unit 4012 is adapted to send a network service request message, in which the network service request message contains the operator ID stored in the ID storage unit 4011.

Specifically, the network service entity 402 includes an ID storage unit 4011, a receiving unit 4022, and a network service control entity 4023.

The ID storage unit 4011 is adapted to store a preconfigured operator ID.

The receiving unit 4022 is adapted to receive the network service request message, in which the network request message contains an operator ID.

The network service control unit 4023 is adapted to terminate communication with the AP when the operator ID in the network service request message is inconsistent with the operator ID stored in the ID storage unit 4011.

The network service entity 402 may be a Register Server or an AG. When the network service entity is the Server, the network service request message is the AP Boot Request message, and the AP requests the Server to update the configuration information thereof. When the network service entity is the AG, the network service request message is the AP Access Request, and the AP requests the AG to allow the access of the AP.

In the technical solutions according to the first and second embodiments of the present invention, the operator ID related to the operator is preconfigured on the UMTS AP and the network service entity, the network service entity is the Server or UMTS AG, and the network service entity terminates the communication with the UMTS AP when the operator ID of the operator providing the UMTS AP is inconsistent with the preconfigured operator ID. Thus, the binding between the UMTS AP and the operator is implemented. On the basis of the same technical idea, when the operator ID of the operator providing the UMTS AP is different from that of the serving operator, the UMTS AP may also stop working so as to implement the binding with the operator. At this time, a parameter required when the operator provides services to the UMTS AP is prestored in the UMTS AP, and the parameter is used to distinguish the operators. Several embodiments are given in the following to describe this situation.

### Third Embodiment

The third embodiment provides an implementing method for binding an UMTS AP and an operator based on radio parameters. When a UMTS AP is manufactured and provided, a PLMN value of an operator is prestored in the UMTS AP. If an operator has multiple PLMN values, all PLMN values of the operator are written into the UMTS AP, this is because that the PLMN values are used in the radio parameters for the UMTS AP to establish a cell at the same time.

As shown in FIG. 5, to implement the binding between the UMTS AP and the operator, the method includes the following steps from the UMTS AP is powered on to the UMTS AP cell is established.

In Step S501, the UMTS AP determines whether a PLMN value of a serving operator in radio parameters thereof configured for the AP by an EMS is consistent with the prestored PLMN value of the operator providing the AP. If multiple PLMN values are stored, the UMTS AP determines whether one of the prestored PLMN values is consistent with the PLMN value in the radio parameters, and if yes, Step S502 is performed; otherwise, Step S503 is performed.

In Step S502, the UMTS AP considers that it still operates on the network of the same operator, and continues to operate normally.

In Step S503, the UMTS AP considers that the radio parameters are modified by another operator, and that the UMTS AP enters the network of another operator. At this time, the UMTS AP stops working.

In the implementing method for binding the UMTS AP and the operator according to the third embodiment, all PLMN values of the providing operator are prestored in the UMTS AP. When the UMTS AP cell is established, if the UMTS AP determines that the PLMN value of the serving operator acquired from the radio parameters is inconsistent with the PLMN values of the providing operator, the UMTS AP stops the operation. Thus, the binding between the UMTS AP and the operator is implemented conveniently, and the UMTS AP provided by an operator cannot operate on networks of other operators freely.

### Fourth Embodiment

The fourth embodiment provides an implementing method for binding an UMTS AP and an operator based on a SIM/USIM card. When a UMTS AP is manufactured and provided, a PLMN value of an operator is prestored in the UMTS AP. If an operator has multiple PLMN values, all PLMN values of the operator are written into the UMTS AP, and the PLMN value is also used an IMSI of the SIM/USIM card at the same time.

The IMSI in a common SIM/USIM card may include a Mobile Country Code (MCC), a Mobile Network Code (MNC), and a Mobile Subscriber Identification Number (MSIN). The MCC is adapted to identify the country which a mobile subscriber registers with, the MNC is adapted to identify the network which a mobile subscriber belongs to, and the MCC and MNC constitute the PLMN values of an operator; the MSIN is adapted to identify a UE in a PLMN service area, and is composed by an HLR ID and a subscriber number in the HLR.

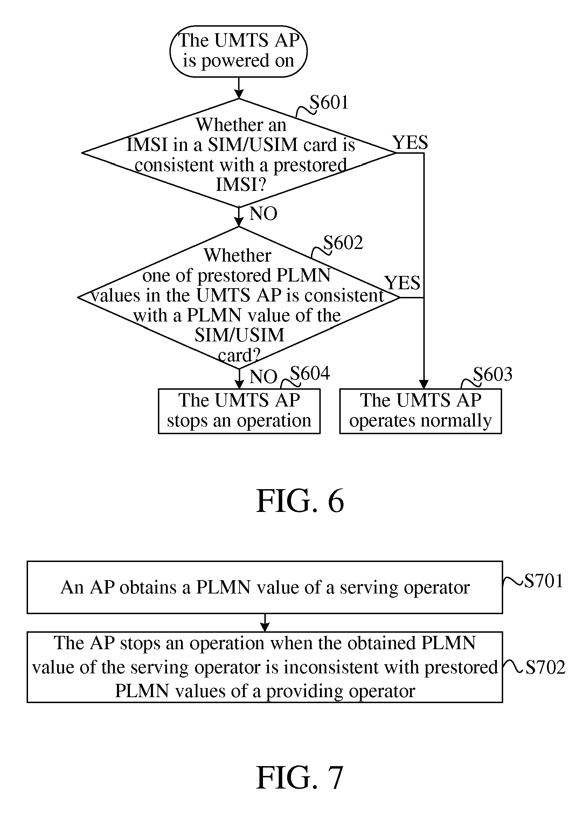

As shown in FIG. 6, to implement the binding between the UMTS AP and the operator, when the UMTS AP is powered on, the method includes the following steps.

In Step S601, the UMTS AP determines whether a prestored IMSI in the UMTS AP is consistent with an IMSI of the current SIM/USIM card; if not, it is determined that the SIM/USIM card is replaced, and Step S602 is performed; otherwise, it is determined that the SIM/USIM card is not replaced, and Step S603 is performed.

In Step S602, the UMTS AP determines whether a PLMN value of a serving operator in the IMSI of the SIM/USIM card is consistent with the prestored PLMN value of the providing operator. If multiple PLMN values are stored, the UMTS AP determines whether one of the prestored PLMN values is consistent with the PLMN value in the IMSI of the SIM/USIM card; if yes, Step S603 is performed; otherwise, Step S604 is performed.

In Step S603, the UMTS AP considers that the operator is not changed, and operates normally.

In Step 604, the UMTS AP considers that the SIM/USIM card of another operator is used, and stops working.

In the implementing method for binding the UMTS AP and the AP according to the fourth embodiment, all PLMN values of the providing operator are prestored in the UMTS AP. When the user tries to use the UMTS AP provided by operator A on the network of operator B, to ensure that the UMTS AP can access operator B, the SIM/USIM card of operator B must be inserted into the UMTS AP. When the UMTS AP finds that the current SIM/USIM card is replaced, the PLMN value in the SIM/USIM card is compared with the prestored PLMN values. As the operator is changed, the PLMN value of the serving operator in the SIM/USIM card is always different from the prestored PLMN values of the providing operator, and thus the UMTS AP stops the operation. Thus, the binding between the UMTS AP and the operator is implemented conveniently, and the UMTS AP provided by an operator cannot operate on networks of other operators freely.

According to the solutions of the third embodiment and the fourth embodiment, in an embodiment, the present invention provides another implementing method for binding an AP and an operator. As shown in FIG. 7, the method includes the following steps.

In Step S701, the AP obtains a PLMN value of a serving operator.

In Step S702, the AP stops working when the obtained PLMN value of the serving operator is inconsistent with prestored PLMN values of a providing operator.

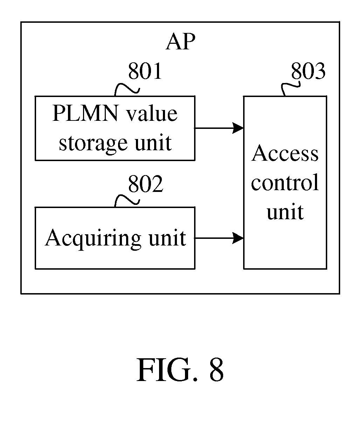

In an embodiment, the present invention provides an AP. As shown in FIG. 8, the AP includes a PLMN value storage unit 801, an acquiring unit 802, and an access control unit 803.

The PLMN value storage unit 801 is adapted to store PLMN values of a providing operator.

The acquiring unit 802 is adapted to acquire a PLMN value of a serving operator.

The access control unit 803 is adapted to stop working when the PLMN value acquired by the acquiring unit 802 is inconsistent with the PLMN values stored in the PLMN storage unit 801.

In the implementing method and system for binding the AP and the operator according to the embodiments of the present invention, under the new network structure in which the AP and AG are added to the mobile communication network, by preconfiguring operator IDs for the AP and the network service entity, the network service entity terminates the communication with the AP when the operator ID in the network service request sent by the AP is inconsistent with the preconfigured operator ID. Alternatively, the PLMN values of the operator providing the AP are prestored in the AP, and the AP stops the operation when the acquired PLMN value of the serving operator is inconsistent with the prestored PLMN values of the providing operator. The two methods implement the binding between the AP and the operator based on the same technical idea, such that the AP provided by an operator cannot operate on networks of other operators freely.

Persons of ordinary skill in the art can understand that all or a part of the processes of the methods according to the above embodiments can be implemented through a computer program instructing relevant hardware, the program may be stored in a computer readable storage medium, and when the program is run, the processes of the methods according to the above embodiments may be included in the program. Here, the storage medium may be a magnetic disk, an optical disk, a read-only memory (ROM), or a random access memory (RAM).

Certainly, persons skilled in the art can make modifications or variations to the present invention without departing from the spirit and scope of the present invention. Therefore, as long as the modifications and variations of the present invention fall within the scope of the claims of the present invention and their equivalents, it is intended that the present invention covers the modifications and variations.

## Claims

1. A method for binding access point (AP) and operator, **characterized by** comprising:
receiving a network service request message sent by an AP, wherein the network service request message comprises an operator identity (ID) of an operator providing the AP; and
terminating communication with the AP when the operator ID in the network service request message is inconsistent with a preconfigured operator ID.

2. The method according to claim 1, wherein before terminating communication with the AP the method further comprises:
returning a network service reject message to the AP before terminating communication with the AP.

3. The method according to claim 1 or claim 2, wherein the method comprises:
sending, by the AP, the network service request message which is configured to request to update configuration information to a Register Server; and
terminating, by the Register Server, communication with the AP when the operator ID in the network service request message is inconsistent with the preconfigured operator ID.

4. The method according to claim 3, wherein before sending the network service request message the method further comprises:
determining, a prestored International Mobile Subscriber Identifier (IMSI) in the AP is inconsistent with an IMSI of a Subscriber Identity Module(SIM)/UMTS Subscriber Identity Module(USIM).

5. The method according to claim 1 or claim 2, wherein the method comprises:
sending, by the AP, the network service request message which is configured to request to update configuration information to a Access Gateway(AG); and
terminating, by the AG, communication with the AP when the operator ID in the network service request message is inconsistent with the preconfigured operator ID.

6. The method according to claim 5, wherein before sending the network service request message the method further comprises:
determining, whether the prestored IMSI is consistent with the IMSI of the SIM/ USIM, if not, sending an AP Boot Request message to a Register Server; and
acquiring an IP address of the AG from the Register Server after receiving an AP Boot Response message sent by the Register Server.

7. A system for binding access point(AP) and operator, **characterized by** comprising:
an AP(401), configured to send a network service request message, wherein the network service request message comprises an operator identity (ID) of an operator providing the AP(401); and
a network service entity(402), configured to receive the network service request message sent by the AP(401), and terminate communication with the AP(401) when the operator ID in the network service request message is inconsistent with a preconfigured operator ID.

8. The system according to claim 7, wherein the network service entity (402) is a register server;
the AP(401) is configured to send the network service request message to the register server when determining a prestored International Mobile Subscriber Identifier (IMSI) is inconsistent with an IMSI of a Subscriber Identity Module(SIM)/UMTS Subscriber Identity Module(USIM); wherein the network service request message is configured to request to update configuration information.

9. The system according to claim 7, wherein the network service entity(402) is an Access Gateway (AG);
the AP(401) is further configured to send the network service request message to the AG according to an acquired IP address of the AG, wherein the network service request message is configured to request to access the AG.

10. An Access Point (AP), **characterized by** comprising:
an ID storage unit(4011), configured to store a preconfigured operator ID;
a sending unit(4012), configured to send a network service request message, wherein the network service request message comprises the preconfigured operator ID stored in the ID storage unit.

11. A network service entity, **characterized by** comprising:
an ID storage unit (4011), configured to store a preconfigured operator ID;
a receiving unit (4022), configured to receive the network service request message, wherein the network request message comprises an operator ID; and
a network service control entity (4023), configured to terminate communication with an AP(401) when the operator ID in the network service request message is inconsistent with the preconfigured operator ID stored in the ID storage unit (4011).

12. A method for binding access point (AP) and operator, **characterized by** comprising:
acquiring a Public Land Mobile Network (PLMN) value of a serving operator; and
stopping working when the acquired PLMN value of the serving operator is inconsistent with all of the prestored PLMN value of an operator providing the AP.

13. The method according to claim 12, wherein acquiring the PLMN value of a serving operator comprises acquiring the PLMN value from a radio parameter configured for the AP when an UMTS AP cell is established or acquiring the PLMN value from an International Mobile Subscriber Identifier (IMSI) of a Subscriber Identity Module(SIM)/UMTS Subscriber Identity Module(USIM).

14. The method according to claim 13, wherein before acquiring the PLMN value of the serving operator the method further comprises:
determining that a prestored IMSI in the AP is inconsistent with the IMSI of the SIM/USIM.

15. An Access Point (AP), **characterized by** comprising:
a PLMN storage unit(801), configured to store a PLMN value of an operator who provides the AP(401);
an acquiring unit (802), configured to acquire a PLMN value of a serving operator; and,
an access control unit (803), configured to stop operation of the AP(401) when the PLMN value acquired by the acquiring unit(802) is inconsistent with the PLMN value stored in the storage unit(801).
